# EUROPÄISCHE PATENTSCHRIFT

(11) **EP 3 371 866 B1**
(45) Veröffentlichungstag und Bekanntmachung des Hinweises auf die Patenterteilung: **18.11.2020**
(21) Anmeldenummer: 15802086.7
(22) Anmeldetag: 30.11.2015
(51) Int. Cl.: H02G 5/06

(54) **VERFAHREN ZUR HERSTELLUNG EINER GASISOLIERTEN ELEKTRISCHEN ENERGIEÜBERTRAGUNGSLEITUNG**
METHOD FOR ASSEMBLING AN ELECTRICAL ENERGY TRANSMISSION LINE
MÉTHODE DE FABRICATION D'UNE LIGNE DE TRANSPORT D'ÉNERGIE ÉLECTRIQUE

(43) Veröffentlichungstag der Anmeldung: 12.09.2018
(73) Patentinhaber: Siemens Aktiengesellschaft, 80333 München (DE)
(72) Erfinder: EBNER, Andreas, 90419 Nürnberg (DE); IMAMOVIC, Denis, 90409 Nürnberg (DE); JUNG, Frank, 33165 Lichtenau - Herbram (DE); MAGIER, Tomasz, 91330 Eggolsheim (DE); SCHEDL, Stefan, 90614 Ammerndorf (DE)
(86) Internationale Anmeldenummer: PCT/EP2015/078081
(87) Internationale Veröffentlichungsnummer: WO 2017/092787

(56) Entgegenhaltungen:
- EP-A1- 0 660 479
- WO-A1-2013/059680
- FR-A1- 2 797 108
- FR-A1- 2 969 405
- US-A- 3 813 475
- US-A- 4 161 621
- US-A- 6 118 068

## Beschreibung

Die Erfindung bezieht sich auf ein Verfahren zum Verbinden eines ersten und eines zweiten Leitungsmoduls miteinander zur Bildung einer gasisolierten elektrischen Energieübertragungsleitung, wobei das erste Leitungsmodul ein erstes Kapselrohr und einen im ersten Kapselrohr befindlichen ersten elektrischen Innenleiter und das zweite Leitungsmodul ein zweites Kapselrohr und einen im zweiten Kapselrohr befindlichen zweiten elektrischen Innenleiter aufweist und wobei im Rahmen des Verfahrens das erste Kapselrohr mit dem zweiten Kapselrohr und der erste Innenleiter mit dem zweiten Innenleiter verbunden wird.

Heutzutage werden die Kapselrohre elektrischer Energieübertragungsleitungen mittels Wolfram-Inertgasschweißen (WIG), also mittels Lichtbogenschweißen, miteinander verschweißt oder mittels Flanschverschraubungen miteinander verschraubt. Im Rahmen einer Vormontage vor dem Verbinden der Kapselrohre, also in einem separaten vorgelagerten Montageschritt, werden zum Halten und Stützen der Innenleiter innerhalb der Kapselrohre Isolatoren in die Kapselrohre eingesetzt.

Gasisolierte Leitungen und Verfahren zu deren Herstellung sind beispielsweise aus der US 3813475 A, der EP 0660479 A1 und der US 4161621 A bekannt.

Der Erfindung liegt die Aufgabe zugrunde, ein Verfahren anzugeben, mit dem sich gasisolierte elektrische Energieübertragungsleitungen besonders einfach und kostengünstig herstellen lassen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass eine Halteringisolatoreinheit, die einen äußeren Haltering und ein mit dem Haltering verbundenes und sich vom Haltering aus radial nach innen erstreckendes Isolatorelement aufweist, von einem Rohrende des ersten Kapselrohres aus in das erste Kapselrohr eingesetzt wird, und zwar derart, dass ein Schweißbadsicherungsabschnitt des Halterings abschnittsweise an der Innenwand des ersten Kapselrohres anliegt und abschnittsweise aus dem ersten Kapselrohr herausragt, das zweite Kapselrohr auf den aus dem ersten Kapselrohr herausragenden Schweißbadsicherungsabschnitt des Halterings aufgeschoben wird, und das erste Kapselrohr, das zweite Kapselrohr und der Haltering miteinander verschweißt werden.

Ein wesentlicher Vorteil des erfindungsgemäßen Verfahrens beruht auf der Doppelfunktion des Halterings der vorgefertigten Halteringisolatoreinheit: Eine erste Funktion des Halterings besteht darin, den Isolator zu halten, der wiederum den ersten und/oder zweiten Innenleiter mechanisch hält bzw. abstützt; und eine zweite Funktion des Halterings der Halteringisolatoreinheit besteht darin, eine Schweißbadsicherung für die Schweißverbindung zwischen den beiden Kapselrohren zu gewährleisten. Durch den Einsatz der erfindungsgemäß vorgesehenen vorgefertigten Halteringisolatoreinheit und die Doppelfunktion des Halterings lassen sich - üblicherweise auf der Baustelle - mit nur drei Montageschritten, nämlich dem Einsetzen der Halteringisolatoreinheit in das erste Leitungsmodul, dem Aufschieben des zweiten Leitungsmoduls auf die Halteringisolatoreinheit und dem Verschweißen der beiden Leitungsmodule miteinander sowie mit der Halteringisolatoreinheit, gleichzeitig sowohl eine Abstützung der Innenleiter innerhalb der Leitungsmodule als auch eine nach außen gasdichte Verbindung zwischen den beiden Kapselrohren erreichen.

Ein weiterer wesentlicher Vorteil des erfindungsgemäßen Verfahrens besteht darin, dass das erste Kapselrohr, das zweite Kapselrohr und der Haltering miteinander verschweißt werden, so dass sich - so gewünscht - mittels einer gasdichten Halteringisolatoreinheit eine gasdichte Trennung der Leitungsmodule erreichen lässt.

Mit Blick auf eine dichte Schweißverbindung zwischen den beiden Kapselrohren wird das zweite Kapselrohr soweit auf den aus dem ersten Kapselrohr herausragenden Schweißbadsicherungsabschnitt des Halterings aufgeschoben, dass sich die Rohrenden der beiden Kapselrohre berühren.

Erfindungsgemäß werden das erste Kapselrohr, das zweite Kapselrohr und der Haltering miteinander durch ein Rührreibschweißverfahren verschweißt. Bevorzugt erfolgt das Rührreibschweißen von außen, besonders bevorzugt im Rahmen eines orbitalen bzw. um 360 Grad umlaufenden Rührreibschweißverfahrens. Mittels eines Rührreibschweißverfahrens lassen sich die Kapselrohre nicht nur miteinander, sondern - und dies ist hier besonders vorteilhaft - aufgrund des Reibvorgangs und der Tiefenwirkung des Rührreibschweißens - im Unterschied zum Lichtbogenschweißen - auch mit dem darunter liegenden Haltering der Halteringisolatoreinheit gasdicht verschweißen, wodurch eine gasdichte Verbindung dreier Teile erreicht wird, und zwar zuverlässig und mit geringem Aufwand.

Die Halteringisolatoreinheit kann ein elektrisch leitfähiges Schnittstellenelement aufweisen, das in der Mitte des Isolatorelements von diesem gehalten wird. Im Falle einer solchen Ausgestaltung der Halteringisolatoreinheit wird es als vorteilhaft angesehen, wenn beim Einsetzen der Halteringisolatoreinheit in das erste Kapselrohr das Schnittstellenelement mit dem ersten Innenleiter elektrisch verbunden wird und vor dem oder beim Aufschieben des zweiten Kapselrohres auf den Schweißbadsicherungsabschnitt des Halterings das Schnittstellenelement mit dem zweiten Innenleiter elektrisch verbunden wird.

Alternativ wird es als vorteilhaft angesehen, wenn das Isolatorelement in der Mitte ein Durchgangsloch aufweist, dessen Innendurchmesser so groß oder mindestens so groß wie der Außendurchmesser des ersten und/oder zweiten Innenleiters ist.

Im Falle der letztgenannten Ausgestaltung des Isolatorelements ist es vorteilhaft, wenn vor dem oder beim Einsetzen der Halteringisolatoreinheit in das erste Kapselrohr das Isolatorelement auf den ersten Innenleiter aufgeschoben wird und beim Aufschieben des zweiten Kapselrohres auf den Schweißbadsicherungsabschnitt des Halterings der zweite Innenleiter mit dem ersten Innenleiter unmittelbar elektrisch verbunden wird.

Alternativ, aber ebenfalls vorteilhaft, kann vorgesehen sein, dass vor dem oder beim Aufschieben des zweiten Kapselrohres auf den Schweißbadsicherungsabschnitt des Halterings der zweite Innenleiter durch das Durchgangsloch hindurch oder zumindest in das Durchgangsloch hineingeschoben und dabei mit dem ersten Innenleiter unmittelbar elektrisch verbunden wird.

Die Erfindung bezieht sich darüber hinaus auf eine gasisolierte elektrische Energieübertragungsleitung gemäß Anspruch 6 mit einem ersten Leitungsmodul und einem mit dem ersten Leitungsmodul verbundenen zweiten Leitungsmodul, wobei das erste Leitungsmodul ein erstes Kapselrohr und einen im ersten Kapselrohr befindlichen ersten elektrischen Innenleiter und das zweite Leitungsmodul ein zweites Kapselrohr und einen im zweiten Kapselrohr befindlichen zweiten elektrischen Innenleiter aufweist und das erste Kapselrohr mit dem zweiten Kapselrohr und der erste Innenleiter mit dem zweiten Innenleiter elektrisch verbunden ist.

Erfindungsgemäß ist bezüglich einer solchen gasisolierten elektrischen Energieübertragungsleitung vorgesehen, dass eine Halteringisolatoreinheit, die einen äußeren Haltering und ein mit dem Haltering unmittelbar verbundenes und sich vom Haltering aus radial nach innen erstreckendes Isolatorelement aufweist, von einem Rohrende des ersten Kapselrohres aus in das te Kapselrohr auf den aus dem ersten Kapselrohr herausragenden Schweißbadsicherungsabschnitt des Halterings aufgeschoben ist und das erste Kapselrohr, das zweite Kapselrohr und der Haltering miteinander verschweißt sind.

Bezüglich der Vorteile der erfindungsgemäßen gasisolierten elektrischen Energieübertragungsleitung sei auf die obigen Ausführungen im Zusammenhang mit dem erfindungsgemäßen Verfahren verwiesen.

Das erste Kapselrohr, das zweite Kapselrohr und der Haltering sind durch ein Rührreibschweißverfahren, besonders bevorzugt durch ein orbitales Rührreibschweißverfahren unter Bildung einer um 360 Grad geschlossen umlaufenden und das erste Kapselrohr, das zweite Kapselrohr und den Haltering verbindenden Rührreibschweißnaht verschweißt.

Sollen die beiden Leitungsmodule der Energieübertragungsleitung in einer Gasstromverbindung stehen, so wird es als vorteilhaft angesehen, wenn die Halteringisolatoreinheit zumindest eine Öffnung oder einen Gasleitkanal aufweist, die bzw. der einen Gasstrom von dem ersten Leitungsmodul in das zweite Leitungsmodul und umgekehrt ermöglicht.

Sollen die beiden Leitungsmodule der Energieübertragungsleitung gasstrommäßig voneinander getrennt sein, so ist es vorteilhaft, wenn die Halteringisolatoreinheit gasdicht ist und die Schweißverbindung im Bereich der Schnittstelle zu den zwei Kapselrohren gasdicht ausgeführt ist.

Bei einer weiteren bevorzugten Ausgestaltung der Energieübertragungsleitung ist vorgesehen, dass die Halteringisolatoreinheit ein elektrisch leitfähiges Schnittstellenelement aufweist, das in der Mitte des Isolatorelements von diesem gehalten wird, auf der dem ersten Leitungsmodul zugewandten Seite mit dem ersten Innenleiter elektrisch verbunden ist und auf der dem zweiten Leitungsmodul zugewandten Seite mit dem zweiten Innenleiter elektrisch verbunden ist.

Der Schweißbadsicherungsabschnitt des Halterings ist von dem Isolator und dem Schnittstellenelement in Leiterlängsrichtung gesehen bevorzugt beabstandet.

Der Isolator und das Schnittstellenelement befinden sich vorzugsweise innerhalb des zweiten Kapselrohres.

Bei einer anderen bevorzugten Ausgestaltung der Energieübertragungsleitung ist vorgesehen, dass das Isolatorelement in der Mitte ein Durchgangsloch aufweist, dessen Innendurchmesser so groß oder mindestens so groß wie der Außendurchmesser des ersten und/oder zweiten Innenleiters ist, der erste Innenleiter durch das Durchgangsloch hindurchragt und der zweite Innenleiter mit dem ersten Innenleiter - bevorzugt im Bereich des zweiten Kapselrohres - elektrisch verbunden ist.

Das Isolatorelement ist vorzugsweise innerhalb des Ringbereiches des äußeren Halterings angeordnet und an der Ringinnenwand des Halterings fest angebracht.

Das Isolatorelement dient vorzugsweise zum mechanischen Halten und Abstützen des ersten und/oder zweiten Innenleiters innerhalb der Kapselrohre.

Die Erfindung wird nachfolgend anhand von Ausführungsbeispielen näher erläutert; dabei zeigen beispielhaft
- Fig. 1-3: Verfahrensschritte eines ersten Ausführungsbeispiels für ein erfindungsgemäßes Verfahren zum Herstellen einer gasisolierten elektrischen Energieübertragungsleitung, wobei die Figur 3 die fertige gasisolierte Energieübertragungsleitung zeigt,
- Fig. 4-6: Verfahrensschritte eines zweiten Ausführungsbeispiels für ein erfindungsgemäßes Verfahren zum Herstellen einer gasisolierten elektrischen Energieübertragungsleitung, wobei die Figur 6 die fertige gasisolierte Energieübertragungsleitung zeigt,
- Fig. 7-9: Verfahrensschritte eines dritten Ausführungsbeispiels für ein erfindungsgemäßes Verfahren zum Herstellen einer gasisolierten elektrischen Energieübertragungsleitung, wobei die Figur 9 die fertige gasisolierte Energieübertragungsleitung zeigt, und
- Figur 10: eine Schweißverbindung zwischen Kapselrohren der Energieübertragungsleitung gemäß den Figuren 3, 6 und 9 näher im Detail.

In den Figuren werden der Übersicht halber für identische oder vergleichbare Komponenten stets dieselben Bezugszeichen verwendet.

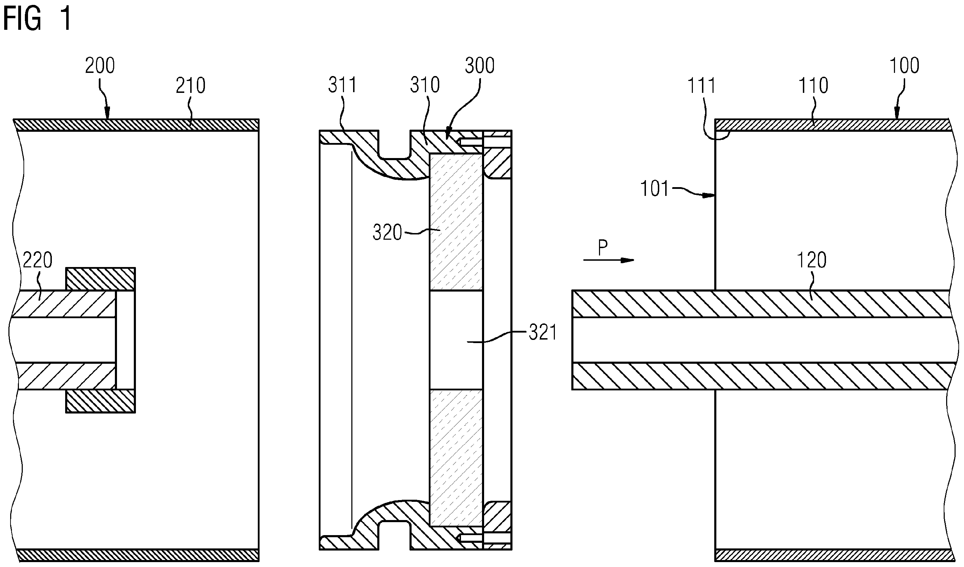

Die Figur 1 zeigt ein erstes Leitungsmodul 100, das zur Bildung einer gasisolierten elektrischen Energieübertragungsleitung mit einem zweiten Leitungsmodul 200 verbunden und verschweißt werden soll. Das erste Leitungsmodul 100 weist ein erstes Kapselrohr 110 auf, in dem sich ein erster rohrförmiger Innenleiter 120 befindet. Der erste rohrförmige Innenleiter 120 ist koaxial zum ersten Kapselrohr 110 angeordnet.

Das zweite Leitungsmodul 200 umfasst ein zweites Kapselrohr 210, in dem sich ein zweiter rohrförmiger Innenleiter 220 befindet. Der zweite rohrförmige Innenleiter 220 ist zum zweiten Kapselrohr 210 ebenfalls koaxial angeordnet.

In der Figur 1 erkennt man darüber hinaus eine Halteringisolatoreinheit 300, die einen äußeren Haltering 310 und ein mit dem Haltering 310 verbundenes und sich vom Haltering 310 aus radial nach innen erstreckendes Isolatorelement 320 aufweist. Das Isolatorelement 320 ist mit einem Durchgangsloch 321 versehen, das koaxial zum Isolatorelement 320 und koaxial zum äußeren Haltering 310 angeordnet ist.

Zur Verbindung der beiden Leitungsmodule 100 und 200 miteinander wird zunächst die Halteringisolatoreinheit 300 entlang der Pfeilrichtung P an einem Rohrende 101 des ersten Kapselrohres 110 in das erste Kapselrohr 110 eingeschoben bzw. eingesetzt. Um das Einschieben der Halteringisolatoreinheit 300 zur ermöglichen, ist der Durchmesser des Durchgangslochs 321 so groß oder mindestens so groß wie der des ersten Innenleiters 120. Das Isolatorelement 320 dient zum mechanischen Halten und Abstützen des ersten Innenleiters 120 und damit mittelbar auch zum Abstützen des zweiten Innenleiters 220 gegenüber den äußeren Kapselrohren 110 und 210 nach Abschluss der Montage.

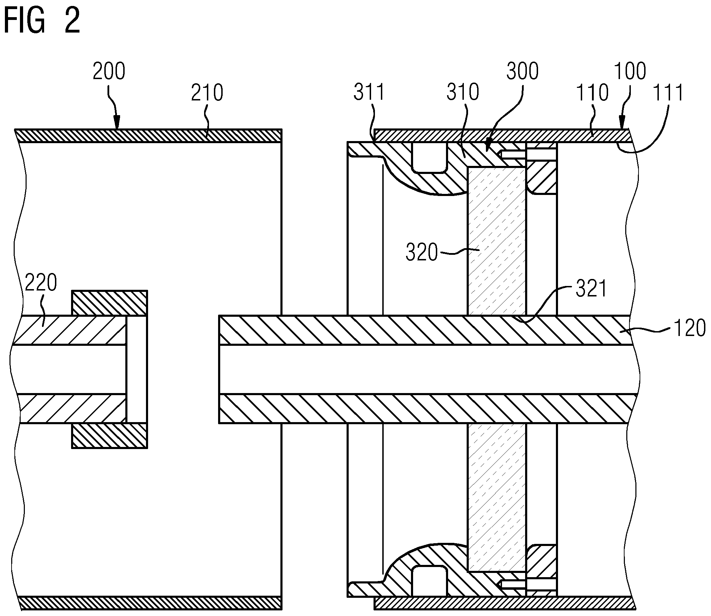

Die Figur 2 zeigt die Halteringisolatoreinheit 300, nachdem diese in das erste Kapselrohr 110 des ersten Leitungsmoduls 100 eingesetzt worden ist. Es lässt sich erkennen, dass die Halteringisolatoreinheit 300 nicht vollständig in das erste Leitungsmodul 100 eingeschoben worden ist, sondern derart, dass ein Schweißbadsicherungsabschnitt 311 des äußeren Halterings 310 abschnittsweise an der Innenwand 111 des ersten Kapselrohres 110 anliegt und abschnittsweise aus dem ersten Kapselrohr 110 bzw. dem ersten Leitungsmodul 100 herausragt.

Darüber hinaus lässt sich in der Figur 2 erkennen, dass der erste Innenleiter 120 vollständig durch das Durchgangsloch 321 des Isolatorelements 320 hindurchragt und somit von dem Isolatorelement 320 mechanisch gestützt bzw. gehalten wird.

In einem nachfolgenden Verfahrensschritt wird das zweite Kapselrohr 210 des zweiten Leitungsmoduls 200 auf den aus dem ersten Kapselrohr 110 herausragenden Abschnitt des äußeren Halterings 310 und insbesondere auf den herausragenden Abschnitt des Schweißbadsicherungsabschnitts 311 aufgeschoben. Vor oder bei dem Aufschieben des zweiten Kapselrohres 210 werden die beiden Innenleiter 120 und 220 der beiden Leitungsmodule 100 und 200 elektrisch miteinander verbunden.

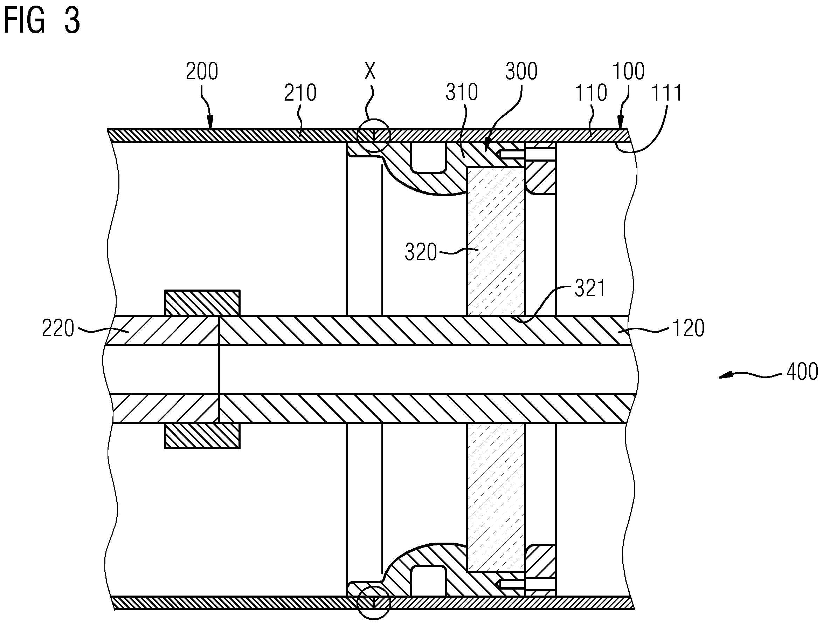

Die Figur 3 zeigt die Anordnung der beiden Leitungsmodule 100 und 200 sowie der Halteringisolatoreinheit 300, nachdem das zweite Kapselrohr 210 aufgeschoben worden ist.

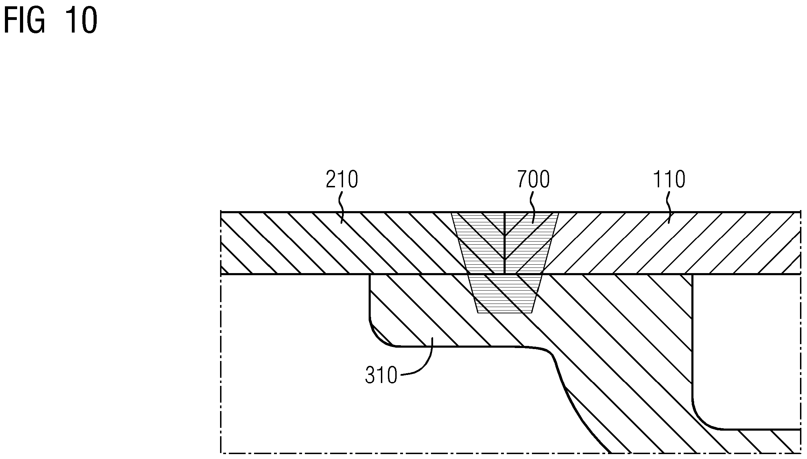

Nach dem Aufschieben des zweiten Kapselrohres 210 werden das erste Kapselrohr 110, das zweite Kapselrohr 210 und der äußere Haltering 310 im Bereich des Schweißbadsicherungsabschnitts 311 miteinander verschweißt. Das Verschweißen erfolgt vorzugsweise durch ein Rührreibschweißen von außen, insbesondere durch ein orbitales Rührreibschweißen. Die Schweißstelle zwischen den beiden Kapselrohren 110 und 210 ist in der Figur 3 durch einen Kreis mit dem Bezugszeichen X gekennzeichnet. Die Schweißstelle ist näher im Detail in der Figur 10 dargestellt.

Nach dem Verschweißen der beiden Kapselrohre 110 und 210 bilden die beiden Leitungsmodule 100 und 200 eine gasisolierte elektrische Energieübertragungsleitung 400 (siehe Figur 3). Es lässt sich in der Figur 3 erkennen, dass die Ausgestaltung der Halteringisolatoreinheit 300 bei dem Ausführungsbeispiel gemäß den Figuren 1 bis 3 derart gewählt ist, dass sich das Isolatorelement 320 nach dem Verbinden der beiden Leitungsmodule 100 und 200 im Bereich des ersten Kapselrohres 110 des ersten Leitungsmoduls 100 befindet.

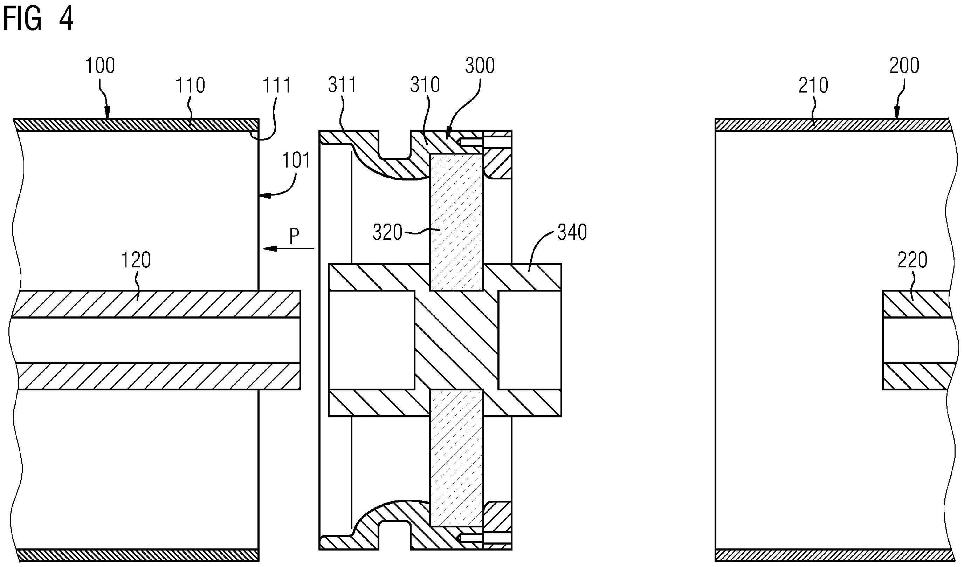

Im Zusammenhang mit den Figuren 4 bis 6 wird nachfolgend ein zweites Ausführungsbeispiel für ein Verfahren zum Herstellen einer gasisolierten elektrischen Energieübertragungsleitung erläutert.

Die Figur 4 zeigt ein erstes Leitungsmodul 100, ein zweites Leitungsmodul 200 sowie eine Halteringisolatoreinheit 300, bevor diese Komponenten miteinander verbunden worden sind. Es lässt sich erkennen, dass die Halteringisolatoreinheit 300 mit einem Schnittstellenelement 340 ausgestattet ist, das in der Mitte des Isolatorelements 320 und damit in der Mitte der Halteringisolatoreinheit 300 angeordnet ist. Das Schnittstellenelement 340 besteht aus elektrisch leitfähigem Material und durchsetzt ein Durchgangsloch 321 im Isolatorelement 320. Das Isolatorelement 320 dient zum unmittelbaren mechanischen Halten und Abstützen des ersten Innenleiters 120 und des zweiten Innenleiters 220 gegenüber den beiden Kapselrohren 110 und 210 sowie zur elektrischen Verbindung der beiden Innenleiter nach Abschluss der Montage.

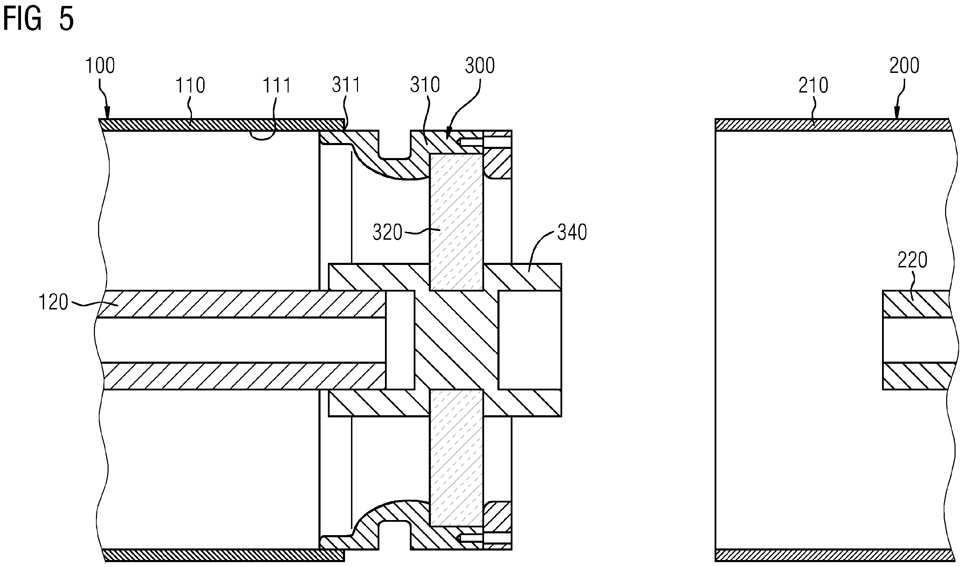

In einem ersten Verfahrensschritt wird die Halteringisolatoreinheit 300 entlang der Pfeilrichtung P am Rohrende 101 des ersten Kapselrohres 110 in dieses eingeschoben, wobei das Schnittstellenelement 340 auf den Innenleiter 120 des ersten Leitungsmoduls 100 aufgeschoben wird und dadurch mit diesem elektrisch kontaktiert wird (siehe Fig. 5).

Das Einschieben der Halteringisolatoreinheit 300 erfolgt nur soweit, dass ein Schweißbadsicherungsabschnitt 311 des äußeren Halterings 310 der Halteringisolatoreinheit 300 abschnittsweise an der Innenwand 111 des ersten Kapselrohres 110 anliegt und abschnittsweise aus dem ersten Kapselrohr 110 herausragt.

Anschließend wird das zweite Kapselrohr 210 des zweiten Leitungsmoduls 200 auf den Teilabschnitt des Schweißbadsicherungsabschnitts 311 der Halteringisolatoreinheit 300 aufgeschoben, der aus dem ersten Kapselrohr 110 herausragt.

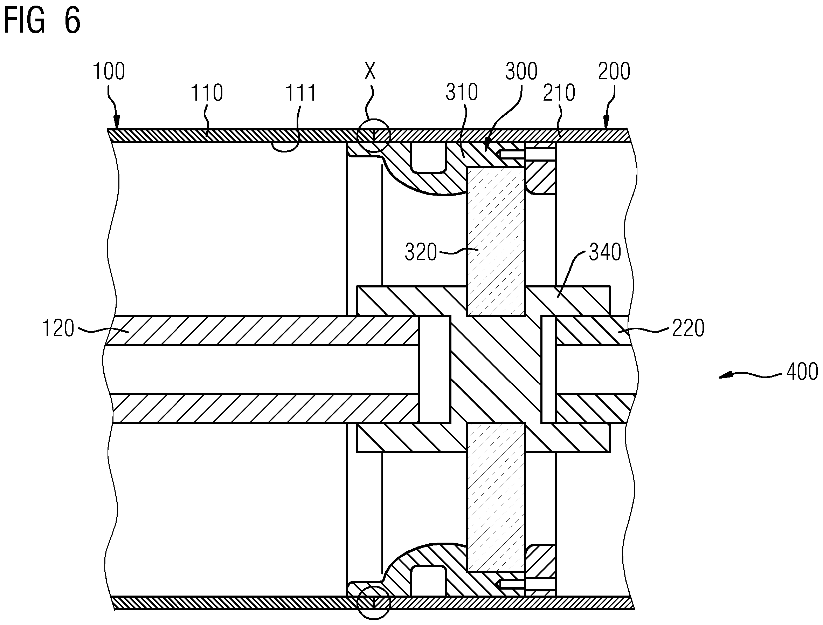

Vor oder bei dem Aufschieben des zweiten Kapselrohres 210 wird der zweite Innenleiter 220 des zweiten Leitungsmoduls 200 in das Schnittstellenelement 340 der Halteringisolatoreinheit 300 eingeschoben, wodurch der zweite Innenleiter 220 elektrisch mit dem Schnittstellenelement 340 und damit mit dem ersten Innenleiter 120 des ersten Leitungsmoduls 100 verbunden wird. Die Figur 6 zeigt die Anordnung der Komponenten, nachdem das zweite Kapselrohr 210 auf den Schweißbadsicherungsabschnitt 311 aufgeschoben worden ist.

Anschließend werden die beiden Kapselrohre 110 und 210 miteinander sowie mit dem äußeren Haltering 310 der Halteringisolatoreinheit 300 verschweißt. Das Verschweißen erfolgt von außen durch Rührreibschweißen, insbesondere durch ein orbitales Rührreibschweißverfahren. Die Schweißstelle zwischen den beiden Kapselrohren 110 und 120 und der Halteringisolatoreinheit 300 ist beispielhaft näher in der Figur 10 gezeigt.

Nach dem Verschweißen bilden die beiden elektrischen Leitungsmodule 100 und 200 eine gasisolierte elektrische Energieübertragungsleitung 400. Es lässt sich in der Figur 6 erkennen, dass die Ausgestaltung der Halteringisolatoreinheit 300 bei dem Ausführungsbeispiel gemäß den Figuren 4 bis 6 derart gewählt ist, dass sich das Isolatorelement 320 nach dem Verbinden der beiden Leitungsmodule 100 und 200 im Bereich des zweiten Kapselrohres 210 des zweiten Leitungsmoduls 200 befindet.

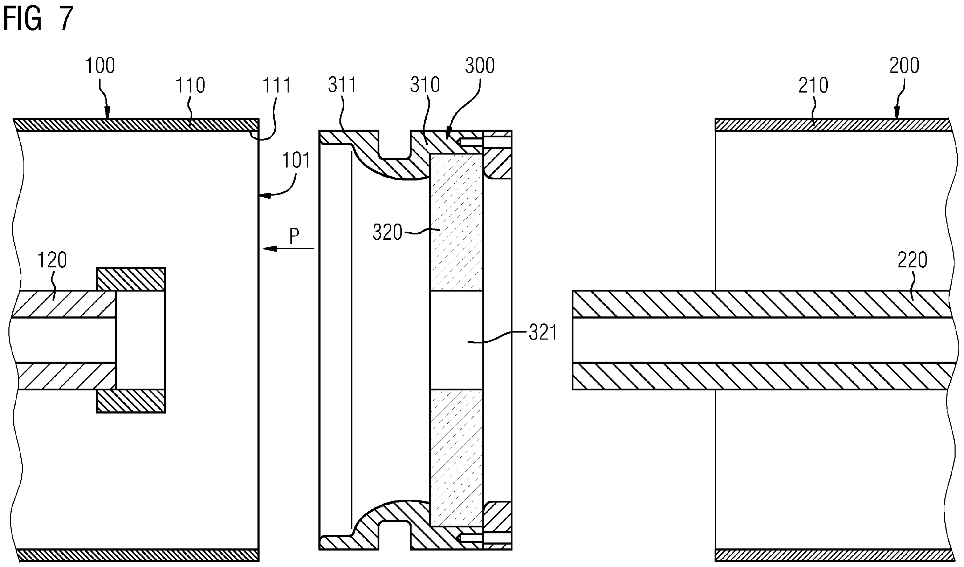

Im Zusammenhang mit den Figuren 7 bis 9 wird nachfolgend ein drittes Ausführungsbeispiel für ein Verfahren zum Herstellen einer gasisolierten elektrischen Energieübertragungsleitung erläutert.

Die Figur 7 zeigt ein erstes Leitungsmodul 100, ein zweites Leitungsmodul 200 sowie eine Halteringisolatoreinheit 300, die im Rahmen der Herstellung der Energieübertragungsleitung miteinander verbunden werden sollen.

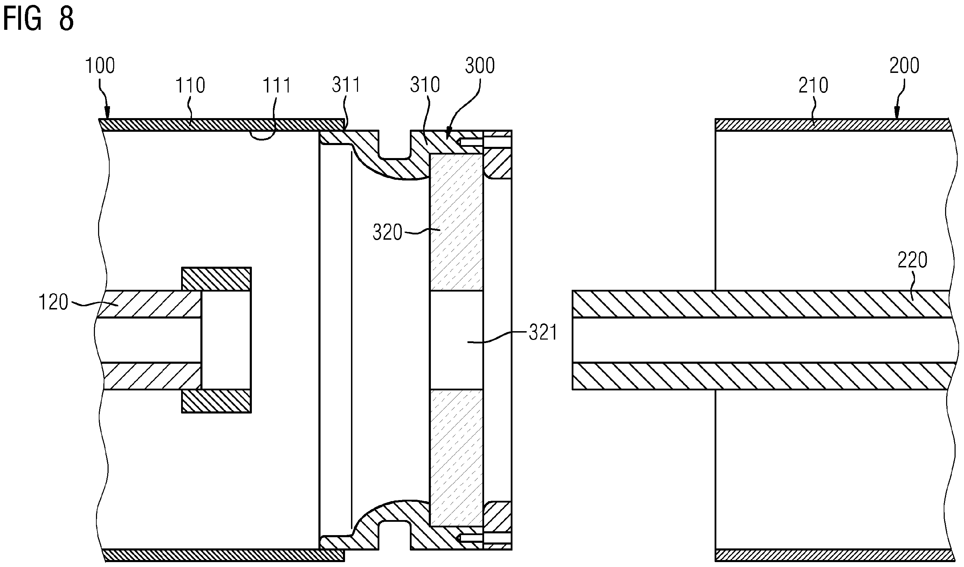

In einem ersten Schritt wird die Halteringisolatoreinheit 300 entlang der Pfeilrichtung P an einem Rohrende 101 in das erste Kapselrohr 110 des ersten Leitungsmoduls 100 eingeschoben, und zwar so weit, dass sich ein Schweißbadsicherungsabschnitt 311 eines äußeren Halterings 310 der Halteringisolatoreinheit 300 abschnittsweise innerhalb des ersten Kapselrohres 110 befindet und an der Innenwand 111 des ersten Kapselrohres 110 anliegt und abschnittsweise aus dem ersten Kapselrohr 110 herausragt. Die Figur 8 zeigt die Halteringisolatoreinheit 300, nachdem diese in das erste Kapselrohr 110 eingeschoben worden ist.

In einem nachfolgenden Verfahrensschritt wird das zweite Kapselrohr 210 des zweiten Leitungsmoduls 200 auf denjenigen Abschnitt des Schweißbadsicherungsabschnitts 311 aufgeschoben, der aus dem ersten Kapselrohr 110 herausragt. Dabei wird der Innenleiter 220 des zweiten Leitungsmoduls 200 durch ein Durchgangsloch 321 im Isolatorelement 320 hindurch geschoben und mit dem ersten Innenleiter 120 des ersten Leitungsmoduls 100 elektrisch verbunden. Das Isolatorelement 320 dient somit zum unmittelbaren mechanischen Abstützen des zweiten Innenleiters 220 und zum mittelbaren Abstützen des ersten Innenleiters 120 gegenüber den beiden äußeren Kapselrohren 110 und 210 nach Abschluss der Montage.

Nach dem Aufschieben des zweiten Leitungsmoduls 200 werden die beiden Kapselrohre 110 und 210 miteinander sowie auch mit dem äußeren Haltering 310 der Halteringisolatoreinheit 300 verschweißt. Das Verschweißen erfolgt durch ein Rührreibschweißverfahren von außen, insbesondere durch ein orbitales Rührreibschweißverfahren. Die Schweißstelle ist beispielhaft näher in der Figur 10 gezeigt.

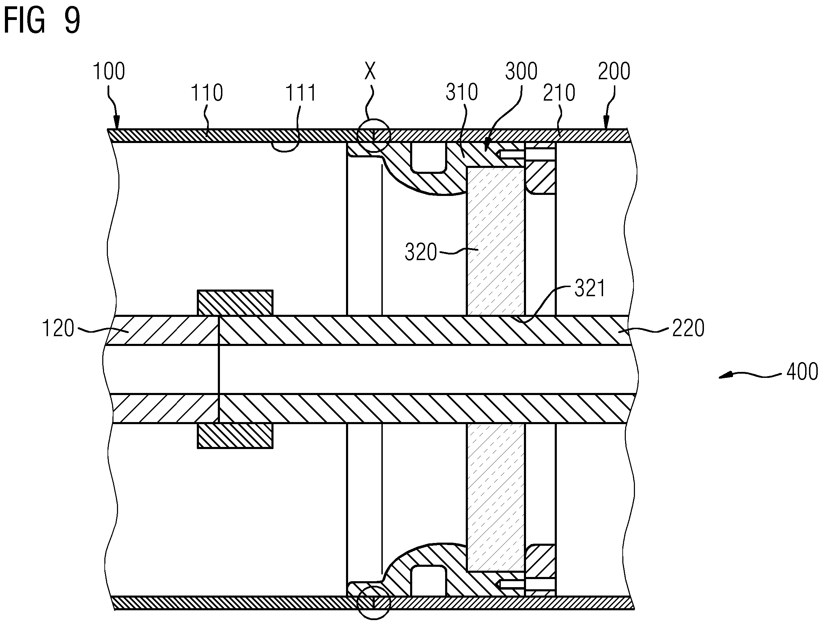

In der Figur 9 lässt sich erkennen, dass die Halteringisolatoreinheit 300 derart ausgestaltet ist, dass der zweite Innenleiter 220 des zweiten Leitungsmoduls 200 durch das Durchgangsloch 321 im Isolatorelement 320 hindurchragt, sich das Isolatorelement 320 im Bereich des zweiten Kapselrohres 210 des zweiten Leitungsmoduls 200 befindet und die elektrische Schnittstelle bzw. die elektrische Verbindungsstelle zwischen den beiden Innenleitern 120 und 220 im Bereich des ersten Kapselrohres 110 des ersten Leitungsmoduls 100 liegt.

Die Figur 10 zeigt - wie bereits erwähnt - ein Ausführungsbeispiel für eine um 360 Grad umlaufende Rührreibschweißnaht 700, die die beiden Kapselrohre 110 und 120 miteinander sowie mit dem äußeren Haltering 310 verbindet. Mittels eines Rührreibschweißverfahrens lassen sich die Kapselrohre 110 und 210 sowohl miteinander als auch mit der Halteringisolatoreinheit 300 einfach und zuverlässig gasdicht verschweißen.

Die Halteringisolatoreinheiten 300, die im Zusammenhang mit den Ausführungsbeispielen gemäß den Figuren 1 bis 9 gezeigt und erläutert worden sind, können gasdicht ausgeführt sein, wie dies in den Figuren 1 bis 9 gezeigt ist. Im Falle einer gasisolierten Ausführung der Halteringisolatoreinheiten 300 sind die elektrischen Leitungsmodule 100 und 200 der Energieübertragungsleitung 400 gasstrommäßig voneinander getrennt. Alternativ ist es möglich, Durchgangslöcher oder Durchgangskanäle in der Halteringisolatoreinheit 300, beispielsweise im Bereich des Halterings 310 oder des Isolatorelements 320 vorzusehen, um einen Gasfluss zwischen den beiden Leitungsmodulen 100 und 200 zu ermöglichen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 100: Leitungsmodul
- 101: Rohrende
- 110: Kapselrohr
- 111: Innenwand
- 120: Innenleiter
- 200: Leitungsmodul
- 210: Kapselrohr
- 220: Innenleiter
- 300: Halteringisolatoreinheit
- 310: Haltering
- 311: Schweißbadsicherungsabschnitt
- 320: Isolatorelement
- 321: Durchgangsloch
- 340: Schnittstellenelement
- 400: Energieübertragungsleitung
- 700: Rührreibschweißnaht

- P: Pfeilrichtung
- X: Einzelheit

## Patentansprüche

1. Verfahren zum Verbinden eines ersten und eines zweiten Leitungsmoduls (100, 200) miteinander zur Bildung einer gasisolierten elektrischen Energieübertragungsleitung (400),
- wobei das erste Leitungsmodul (100) ein erstes Kapselrohr (110) und einen im ersten Kapselrohr (110) befindlichen ersten elektrischen Innenleiter (120) und das zweite Leitungsmodul (200) ein zweites Kapselrohr (210) und einen im zweiten Kapselrohr (210) befindlichen zweiten elektrischen Innenleiter (220) aufweist und wobei
- im Rahmen des Verfahrens das erste Kapselrohr (110) mit dem zweiten Kapselrohr (210) und der erste Innenleiter (120) mit dem zweiten Innenleiter (220) verbunden wird, wobei
- eine Halteringisolatoreinheit (300), die einen äußeren Haltering (310) und ein mit dem Haltering (310) verbundenen und sich vom Haltering (310) aus radial nach innen erstreckendes Isolatorelement (320) aufweist, von einem Rohrende (101) des ersten Kapselrohrs (110) aus in das erste Kapselrohr (110) eingesetzt wird, und zwar derart, dass ein Schweißbadsicherungsabschnitt (311) des Halterings (310) abschnittsweise an der Innenwand (111) des ersten Kapselrohrs (110) anliegt und abschnittsweise aus dem ersten Kapselrohr (110) herausragt,
- das zweite Kapselrohr (210) auf den aus dem ersten Kapselrohr (110) herausragenden Schweißbadsicherungsabschnitt (311) des Halterings (310) aufgeschoben wird,
**dadurch gekennzeichnet, dass** das zweite Kapselrohr (210) soweit auf den aus dem ersten Kapselrohr (110) herausragenden Schweißbadsicherungsabschnitt (311) des Halterings (310) aufgeschoben wird, dass sich die Rohrenden der beiden Kapselrohre berühren, und das erste Kapselrohr (110), das zweite Kapselrohr (210) und der Haltering (310) miteinander durch Rührreibschweißen verschweißt werden.

2. Verfahren nach Anspruch 1,
**dadurch gekennzeichnet, dass** das erste Kapselrohr (110), das zweite Kapselrohr (210) und der Haltering (310) miteinander durch orbitales Rührreibschweißen von außen verschweißt werden.

3. Verfahren nach einem der voranstehenden Ansprüche,
**dadurch gekennzeichnet, dass**
- die Halteringisolatoreinheit (300) ein elektrisch leitfähiges Schnittstellenelement (340) aufweist, das in der Mitte des Isolatorelements (320) von diesem gehalten wird,
- beim Einsetzen der Halteringisolatoreinheit (300) in das erste Kapselrohr (110) das Schnittstellenelement (340) mit dem ersten Innenleiter (120) elektrisch verbunden wird und
- vor dem oder beim Aufschieben des zweiten Kapselrohres (210) auf den Schweißbadsicherungsabschnitt (311) des Halterings (310) das Schnittstellenelement (340) mit dem zweiten Innenleiter (220) elektrisch verbunden wird.

4. Verfahren nach einem der voranstehenden Ansprüche,
**dadurch gekennzeichnet, dass**
- das Isolatorelement (320) in der Mitte ein Durchgangsloch (321) aufweist, dessen Innendurchmesser so groß oder mindestens so groß wie der Außendurchmesser des ersten Innenleiters (120) ist,
- vor dem oder beim Einsetzen der Halteringisolatoreinheit (300) in das erste Kapselrohr (110) das Isolatorelement (320) auf den ersten Innenleiter (120) aufgeschoben wird und
- beim Aufschieben des zweiten Kapselrohres (210) auf den Schweißbadsicherungsabschnitt (311) des Halterings (310) der zweite Innenleiter (220) mit dem ersten Innenleiter (120) unmittelbar elektrisch verbunden wird.

5. Verfahren nach einem der voranstehenden Ansprüche,
**dadurch gekennzeichnet, dass**
- das Isolatorelement (320) in der Mitte ein Durchgangsloch (321) aufweist, dessen Innendurchmesser so groß oder mindestens so groß wie der Außendurchmesser des zweiten Innenleiters (220) ist, und
- vor dem oder beim Aufschieben des zweiten Kapselrohres (210) auf den Schweißbadsicherungsabschnitt (311) des Halterings (310) der zweite Innenleiter (220) durch das Durchgangsloch (321) hindurch oder zumindest in das Durchgangsloch (321) hineingeschoben und mit dem ersten Innenleiter (120) unmittelbar elektrisch verbunden wird.

6. Gasisolierte elektrische Energieübertragungsleitung (400) mit einem ersten Leitungsmodul (100) und einem mit dem ersten Leitungsmodul (100) verbundenen zweiten Leitungsmodul (200),
- wobei das erste Leitungsmodul (100) ein erstes Kapselrohr (110) und einen im ersten Kapselrohr (110) befindlichen ersten elektrischen Innenleiter (120) und das zweite Leitungsmodul (200) ein zweites Kapselrohr (210) und einen im zweiten Kapselrohr (210) befindlichen zweiten elektrischen Innenleiter (220) aufweist und
- das erste Kapselrohr (110) mit dem zweiten Kapselrohr (210) und der erste Innenleiter (120) mit dem zweiten Innenleiter (220) elektrisch verbunden ist, und wobei
- eine Halteringisolatoreinheit (300), die einen äußeren Haltering (310) und ein mit dem Haltering (310) unmittelbar verbundenes und sich vom Haltering (310) aus radial nach innen erstreckendes Isolatorelement (320) aufweist, von einem Rohrende (101) des ersten Kapselrohres (110) aus in das erste Kapselrohr (110) eingesetzt ist, und zwar derart, dass ein Schweißbadsicherungsabschnitt (311) des Halterings (310) abschnittsweise an der Innenwand (111) des ersten Kapselrohres (110) anliegt und abschnittsweise aus dem ersten Kapselrohr (110) herausragt,
- das zweite Kapselrohr (210) auf den aus dem ersten Kapselrohr (110) herausragenden Schweißbadsicherungsabschnitt (311) des Halterings (310) aufgeschoben ist, **dadurch gekennzeichnet, dass** das erste Kapselrohr (110), das zweite Kapselrohr (210) und der Haltering (310) miteinander durch Rührreibschweißen verschweißt sind.

7. Gasisolierte elektrische Energieübertragungsleitung (400) nach Anspruch 6,
**dadurch gekennzeichnet, dass** die Halteringisolatoreinheit (300) zumindest eine Öffnung oder einen Gasleitkanal aufweist, die bzw. der einen Gasstrom von dem ersten Leitungsmodul (100) in das zweite Leitungsmodul (200) und umgekehrt ermöglicht.

8. Gasisolierte elektrische Energieübertragungsleitung (400) nach einem der voranstehenden Ansprüche6 oder 7,
**dadurch gekennzeichnet, dass**
- die Halteringisolatoreinheit (300) gasdicht ist und die Schweißverbindung im Bereich der Schnittstelle zu den zwei Kapselrohren gasdicht ausgeführt ist und
- die beiden Leitungsmodule (100, 200) gasstrommäßig voneinander getrennt sind.

9. Gasisolierte elektrische Energieübertragungsleitung (400) nach einem der voranstehenden Ansprüche 6 bis 8,
**dadurch gekennzeichnet, dass** die Halteringisolatoreinheit (300) ein elektrisch leitfähiges Schnittstellenelement (340) aufweist, das
- in der Mitte des Isolatorelements (320) von diesem gehalten wird,
- auf der dem ersten Leitungsmodul (100) zugewandten Seite mit dem ersten Innenleiter (120) elektrisch verbunden ist und
- auf der dem zweiten Leitungsmodul (200) zugewandten Seite mit dem zweiten Innenleiter (220) elektrisch verbunden ist.

10. Gasisolierte elektrische Energieübertragungsleitung (400) nach Anspruch 9,
**dadurch gekennzeichnet, dass**
- der Schweißbadsicherungsabschnitt (311) des Halterings (310) von dem Isolatorelement (320) und dem Schnittstellenelement (340) in Leiterlängsrichtung gesehen beabstandet ist und
- sich das Isolatorelement (320) und das Schnittstellenelement (340) innerhalb des zweiten Kapselrohres (210) befinden.

11. Gasisolierte elektrische Energieübertragungsleitung (400) nach einem der voranstehenden Ansprüche 6 bis 10,
**dadurch gekennzeichnet, dass**
- das Isolatorelement (320) in der Mitte ein Durchgangsloch (321) aufweist, dessen Innendurchmesser so groß oder mindestens so groß wie der Außendurchmesser des ersten Innenleiters (120) ist,
- der erste Innenleiter (120) durch das Durchgangsloch (321) hindurchragt und
- der zweite Innenleiter (220) mit dem ersten Innenleiter (120) im Bereich des zweiten Kapselrohres (210) elektrisch verbunden ist.

12. Gasisolierte elektrische Energieübertragungsleitung (400) nach einem der voranstehenden Ansprüche 6 bis 10,
**dadurch gekennzeichnet, dass** das Isolatorelement (320) innerhalb des Ringbereiches des äußeren Halterings (310) angeordnet ist und an der Ringinnenwand des Halterings (310) fest angebracht ist.

## Claims

1. Method for connecting a first and a second line module (100, 200) to one another to form a gas-insulated electrical power transmission line (400),
- wherein the first line module (100) has a first encapsulating tube (110) and a first electrical inner conductor (120) located in the first encapsulating tube (110), and the second line module (200) has a second encapsulating tube (210) and a second electrical inner conductor (220) located in the second encapsulating tube (210), and wherein
- as part of the method, the first encapsulating tube (110) is connected to the second encapsulating tube (210) and the first inner conductor (120) is connected to the second inner conductor (220), wherein
- a retaining ring insulator unit (300), which has an outer retaining ring (310) and an insulator element (320) connected to the retaining ring (310) and extending radially inwards from the retaining ring (310), is inserted into the first encapsulating tube (110) from a tube end (101) of the first encapsulating tube (110), to be precise in such a way that a weld pool backing portion (311) of the retaining ring (310) partly lies against the inner wall (111) of the first encapsulating tube (110) and partly protrudes out of the first encapsulating tube (110),
- the second encapsulating tube (210) is pushed onto the weld pool backing portion (311) of the retaining ring (310) protruding out of the first encapsulating tube (110), **characterized in that**
the second encapsulating tube (210) is pushed onto the weld pool backing portion (311) of the retaining ring (310) protruding out of the first encapsulating tube (110) to such an extent that the tube ends of the two encapsulating tubes touch, and the first encapsulating tube (110), the second encapsulating tube (210) and the retaining ring (310) are welded to one another by friction stir welding.

2. Method according to Claim 1,
**characterized in that**
the first encapsulating tube (110), the second encapsulating tube (210) and the retaining ring (310) are welded to one another from the outside by orbital friction stir welding.

3. Method according to one of the preceding claims, **characterized in that**
- the retaining ring insulator unit (300) has an electrically conductive interface element (340), which is held in the middle of the insulator element (320) by the latter,
- when the retaining ring insulator unit (300) is inserted into the first encapsulating tube (110), the interface element (340) is electrically connected to the first inner conductor (120) and
- before or during the pushing of the second encapsulating tube (210) onto the weld pool backing portion (311) of the retaining ring (310), the interface element (340) is electrically connected to the second inner conductor (220).

4. Method according to one of the preceding claims, **characterized in that**
- the insulator element (320) has in the middle a through-hole (321), the inside diameter of which is as large or at least as large as the inside diameter of the first inner conductor (120),
- before or during the inserting of the retaining ring insulator unit (300) into the first encapsulating tube (110), the insulator element (320) is pushed onto the first inner conductor (120) and
- during the pushing of the second encapsulating tube (210) onto the weld pool backing portion (311) of the retaining ring (310), the second inner conductor (220) is electrically connected directly to the first inner conductor (120).

5. Method according to one of the preceding claims, **characterized in that**
- the insulator element (320) has in the middle a through-hole (321), the inside diameter of which is as large or at least as large as the outside diameter of the second inner conductor (220), and
- before or during the pushing of the second encapsulating tube (210) onto the weld pool backing portion (311) of the retaining ring (310), the second inner conductor (220) is pushed through the through-hole (321) or at least into the through-hole (321) and is electrically connected directly to the first inner conductor (120).

6. Gas-insulated electrical power transmission line (400) with a first line module (100) and a second line module (200), connected to the first line module (100),
- wherein the first line module (100) has a first encapsulating tube (110) and a first electrical inner conductor (120) located in the first encapsulating tube (110), and the second line module (200) has a second encapsulating tube (210) and a second electrical inner conductor (220) located in the second encapsulating tube (210), and
- the first encapsulating tube (110) is connected to the second encapsulating tube (210) and the first inner conductor (120) is connected to the second inner conductor (220),
and wherein
- a retaining ring insulator unit (300), which has an outer retaining ring (310) and an insulator element (320) connected directly to the retaining ring (310) and extending radially inwards from the retaining ring (310), has been inserted into the first encapsulating tube (110) from a tube end (101) of the first encapsulating tube (110), to be precise in such a way that a weld pool backing portion (311) of the retaining ring (310) partly lies against the inner wall (111) of the first encapsulating tube (110) and partly protrudes out of the first encapsulating tube (110),
- the second encapsulating tube (210) has been pushed onto the weld pool backing portion (311) of the retaining ring (310) protruding out of the first encapsulating tube (110), **characterized in that** the first encapsulating tube (110), the second encapsulating tube (210) and the retaining ring (310) have been welded to one another by friction stir welding.

7. Gas-insulated electrical power transmission line (400) according to Claim 6,
**characterized in that** the retaining ring insulator unit (300) has at least one opening or a gas conducting channel, which allows a gas flow from the first line module (100) into the second line module (200) and vice versa.

8. Gas-insulated electrical power transmission line (400) according to one of the preceding Claims 6 or 7,
**characterized in that**
- the retaining ring insulator unit (300) is gastight and the welded connection in the region of the interface with respect to the two encapsulating tubes is made in a gastight manner and
- the two line modules (100, 200) are separate from one another in terms of the gas flow.

9. Gas-insulated electrical power transmission line (400) according to one of the preceding Claims 6 to 8,
**characterized in that** the retaining ring insulator unit (300) has an electrically conductive interface element (340), which
- is held in the middle of the insulator element (320) by the latter,
- is electrically connected to the first inner conductor (120) on the side facing the first line module (100) and
- is electrically connected to the second inner conductor (220) on the side facing the second line module (200).

10. Gas-insulated electrical power transmission line (400) according to Claim 9,
**characterized in that**
- the weld pool backing portion (311) of the retaining ring (310) is kept at a distance from the insulator element (320) and the interface element (340), seen in the longitudinal direction of the conductors, and
- the insulator element (320) and the interface element (340) are located within the second encapsulating tube (210).

11. Gas-insulated electrical power transmission line (400) according to one of the preceding Claims 6 to 10, **characterized in that**
- the insulator element (320) has in the middle a through-hole (321), the inside diameter of which is as large or at least as large as the inside diameter of the first inner conductor (120),
- the first inner conductor (120) protrudes through the through-hole (321) and
- the second inner conductor (220) is electrically connected to the first inner conductor (120) in the region of the second encapsulating tube (210).

12. Gas-insulated electrical power transmission line (400) according to one of the preceding Claims 6 to 10,
**characterized in that**
the insulator element (320) is arranged within the annular region of the outer retaining ring (310) and is firmly attached to the inner ring wall of the retaining ring (310).

## Revendications

1. Procédé de liaison d'un premier et d'un deuxième modules (100, 200) de ligne entre eux pour former une ligne (400) de transport d'énergie électrique isolée par du gaz,
- dans lequel le premier module (100) de ligne a un premier tuyau (110) de blindage et un premier conducteur (120) électrique intérieure se trouvant dans le premier tuyau (110) de blindage et le deuxième module (200) de ligne a un deuxième tuyau (210) de blindage et un conducteur (220) électrique intérieur se trouvant dans le deuxième tuyau (210) de blindage et dans lequel
- dans le cadre du procédé, on relie le premier tuyau (110) de blindage au deuxième tuyau (210) de blindage et le premier conducteur (120) intérieur au deuxième conducteur (220) intérieur, dans lequel
- on insère, par un bout (101) du premier tuyau (110) de blindage, dans le premier tuyau (110) de blindage, une unité (300) d'isolateur à anneau de maintien, qui a un anneau (310) extérieur de maintien et un élément (320) d'isolateur relié à l'anneau (310) de maintien et s'étendant vers l'intérieur radialement à partir de l'anneau (310) de maintien, et cela de manière à ce qu'une partie (311) de fixation à bain de soudure de l'anneau (310) de maintien s'applique par endroits à la paroi (111) intérieure du premier tuyau (110) de blindage et fasse saillie par endroits du premier tuyau (110) de blindage,
- on enfile le deuxième tuyau (210) de blindage sur la partie (311) de fixation à bain de soudure, sortant du premier tuyau (110) de blindage, de l'anneau (310) de maintien,
**caractérisé en ce que**
- on enfile le deuxième tuyau (210) de blindage si loin sur la partie (311) de fixation à bain de soudure, en saillie du premier tuyau (110) de blindage, de l'anneau (310) de maintien, que les bouts des deux tuyaux de blindage se touchent et on soude le premier tuyau (110) de blindage, le deuxième tuyau (210) de blindage et l'anneau (310) de maintien entre eux par soudage par friction avec agitation.

2. Procédé suivant la revendication 1,
**caractérisé en ce que**
l'on soude le premier tuyau (110) de blindage, le deuxième tuyau (210) de blindage et l'anneau (310) de maintien entre eux de l'extérieur par soudage orbital par friction avec agitation.

3. Procédé suivant l'une des revendications précédentes, **caractérisé en ce que**
- l'unité (300) d'isolateur à anneau de maintien a un élément (340) d'interface conducteur de l'électricité, qui est maintenu au milieu de l'élément (320) d'isolateur par celui-ci,
- lors de l'insertion de l'unité (300) d'isolateur à anneau de maintien dans le premier tuyau (110) de blindage, on relie électriquement l'élément (340) d'interface au premier conducteur (120) intérieur, et
- avant ou lors de l'enfilage du deuxième tuyau (210) de blindage sur la partie (311) de fixation à bain de soudure de l'anneau (310) de maintien, on relie électriquement l'élément (340) d'interface au deuxième conducteur (220) intérieur.

4. Procédé suivant l'une des revendications précédentes, **caractérisé en ce que**
- l'élément (320) d'isolateur a au milieu un trou (321) traversant, dont le diamètre intérieur est aussi grand ou au moins aussi grand que le diamètre extérieur du premier conducteur (120) intérieur,
- avant ou lors de l'insertion de l'unité (300) d'isolateur à anneau de maintien dans le premier tuyau (110) de blindage, on enfile l'élément (320) d'isolateur sur le premier conducteur (120) intérieur, et
- lorsque l'on enfile le deuxième tuyau (210) de blindage sur la partie (311) de fixation à bain de soudure de l'anneau (310) de maintien, on relie électriquement directement le deuxième conducteur (220) intérieur au premier conducteur (120) intérieur.

5. Procédé suivant l'une des revendications précédentes, **caractérisé en ce que**
- l'élément (320) d'isolateur a au milieu un trou (321) traversant, dont le diamètre intérieur est aussi grand ou au moins aussi grand que le diamètre extérieur du deuxième conducteur (220) intérieur, et
- avant ou lorsque l'on enfile le deuxième tuyau (210) de blindage sur la partie (311) de fixation à bain de soudure de l'anneau (310) de maintien, on fait passer le deuxième conducteur (220) intérieur dans le trou (321) traversant, ou au moins on l'y enfile, et on le relie électriquement directement au premier conducteur (120) intérieur.

6. Ligne (400) de transport d'énergie électrique isolée par du gaz, comprenant un premier module (100) de ligne et un deuxième module (200) de ligne relié au premier module (100) de ligne,
- dans lequel le premier module (100) de ligne a un premier tuyau (110) de blindage et un premier conducteur (120) électrique intérieure se trouvant dans le premier tuyau (110) de blindage et le deuxième module (200) de ligne a un deuxième tuyau (210) de blindage et un deuxième conducteur (220) électrique intérieur se trouvant dans le deuxième tuyau (210) de blindage, et
- le premier tuyau (110) de blindage est relié au deuxième tuyau (210) de blindage et le premier conducteur (120) intérieur est relié électriquement au deuxième conducteur (220) intérieur,
et dans laquelle
- une unité (300) d'isolateur à anneau de maintien, qui a un anneau (310) extérieur de maintien et un élément (320) isolateur relié directement à l'anneau (310) de maintien et s'étendant vers l'intérieur radialement à partir de l'anneau (310) de maintien, est insérée par un bout (101) du premier tuyau (110) de blindage dans le premier tuyau (110) de blindage, et cela de manière à ce qu'une partie (311) de fixation à bain de soudure de l'anneau (310) de maintien s'applique par endroits à la paroi (111) intérieure du premier tuyau (110) de blindage et fasse saillie par endroits du premier tuyau (110) de blindage,
- le deuxième tuyau (210) de blindage est enfilé sur la partie (311) de fixation à bain de soudure, faisant saillie du premier tuyau (110) de blindage, de l'anneau (310) de maintien,
**caractérisée en ce que**
le premier tuyau (110) de blindage, le deuxième tuyau (210) de blindage et l'anneau (310) de maintien sont soudés entre eux par soudage par friction avec agitation.

7. Ligne (400) de transport d'énergie électrique isolée par du gaz suivant la revendication 6,
**caractérisée en ce que**
l'unité (300) d'isolateur à anneau de maintien a au moins une ouverture ou un conduit de passage de gaz, qui rend possible un courant de gaz du premier module (100) de ligne au deuxième module (200) de ligne et inversement.

8. Ligne (400) de transport d'énergie électrique isolée par du gaz suivant l'une des revendications 6 ou 7 précédentes, **caractérisée en ce que**
- l'unité (300) d'isolateur à anneau de maintien est étanche au gaz et le soudage, dans la région de l'interface avec les deux tuyaux de blindage, est réalisé d'une manière étanche au gaz, et
- les deux modules (100, 200) de ligne sont séparés l'un de l'autre en ce qui concerne le courant de gaz.

9. Ligne (400) de transport d'énergie électrique isolée par du gaz suivant l'une des revendications 6 à 8 précédentes, **caractérisée en ce que**
l'unité (300) d'isolateur à anneau de maintien a un élément (340) d'interface conducteur de l'électricité, qui
- est maintenu au milieu de l'élément (320) de l'isolateur par celui-ci,
- est relié électriquement au premier conducteur (120) intérieur du côté tourné vers le premier module (100) de ligne, et
- est relié électriquement au deuxième conducteur (220) intérieur du côté tourné vers le deuxième module (200) de ligne.

10. Ligne (400) de transport d'énergie électrique isolée par du gaz suivant la revendication 9,
**caractérisée en ce que**
- la partie (311) de fixation à bain de soudure de l'anneau (310) de maintien est à distance, considéré dans la direction longitudinale du conducteur, de l'élément (320) d'isolateur et de l'élément (340) d'interface, et
- l'élément (320) d'isolateur et l'élément (340) d'interface se trouvent à l'intérieur du deuxième tuyau (210) de blindage.

11. Ligne (400) de transport d'énergie électrique isolée par du gaz suivant l'une des revendications 6 à 10 précédentes, **caractérisée en ce que**
- l'élément (320) d'isolateur a au milieu un trou (321) traversant, dont le diamètre intérieur est aussi grand ou au moins aussi grand que le diamètre extérieur du premier conducteur (120) intérieur,
- le premier conducteur (120) intérieur passe dans le trou (321) traversant et
- le deuxième conducteur (220) intérieur est relié électriquement au premier conducteur (120) intérieur, dans la région du deuxième tuyau (210) de blindage.

12. Ligne (400) de transport d'énergie électrique isolée par du gaz suivant l'une des revendications 6 à 10 précédentes,
**caractérisée en ce que**
l'élément (320) d'isolateur est disposé à l'intérieur de la région annulaire de l'anneau (310) extérieur de maintien et est fixé solidement à la paroi intérieure de l'anneau (310) de maintien.
